# EUROPÄISCHE PATENTSCHRIFT

(11) **EP 3 160 794 B1**
(45) Veröffentlichungstag und Bekanntmachung des Hinweises auf die Patenterteilung: **16.05.2018**
(21) Anmeldenummer: 15712048.6
(22) Anmeldetag: 14.03.2015
(51) Int. Cl.: B60N 2/00, B60N 2/90

(54) **VORRICHTUNG UND VERFAHREN ZUM BELEUCHTEN EINES AUF EINEM SITZ IN EINEM FAHRZEUG ANGEORDNETEN OBJEKTS**
DEVICE AND METHOD FOR ILLUMINATING AN OBJECT LOCATED ON A VEHICLE SEAT
DISPOSITIF ET PROCEDE D'ECLAIRAGE D'UN OBJET DISPOSÉ SUR UN SIEGE DE VEHICULE

(30) Priorität: 22.05.2014 DE 102014007618
(43) Veröffentlichungstag der Anmeldung: 03.05.2017
(73) Patentinhaber: Audi AG, 85045 Ingolstadt (DE)
(72) Erfinder: MULINSKI, Stefan, 85134 Stammheim (DE)
(74) Vertreter: Thielmann, Frank
(86) Internationale Anmeldenummer: PCT/EP2015/000570
(87) Internationale Veröffentlichungsnummer: WO 2015/176785

(56) Entgegenhaltungen:
- WO-A2-2009/058723
- US-A1- 2009 129 105
- US-A1- 2010 214 795

## Beschreibung

Die vorliegende Erfindung betrifft eine Vorrichtung zum Beleuchten eines auf einem Sitz in einem Fahrzeug angeordneten Objekts sowie ein Verfahren zum Beleuchten des Objekts.

Objekte in Fahrzeugen, wie bspw. Babyschalen sowie ein ggf. in einer Babyschale angeordnetes Kind können einen Fahrer insbesondere bei Dunkelheit ablenken, da der Fahrer, um das Objekt bzw. das Kind zu betreuen, sich in der Dunkelheit orientieren und das jeweilige Objekt bzw. Kind zunächst suchen muss.

Ferner kann eine aktivierte Innenraumbeleuchtung, wie sie häufig zum Beobachten von Objekten innerhalb eines Fahrzeugs durch den Fahrer verwendet wird, dem Fahrzeug entgegenkommenden Gegenverkehr blenden und dadurch gefährden. Um ein gefahrloses Beleuchten von Objekten in einem Fahrzeug zu ermöglichen, sollte das Objekt folglich so angeleuchtet werden, dass der Gegenverkehr nicht geblendet wird.

Aus dem Stand der Technik sind Vorrichtungen zum Beleuchten von Objekten in Fahrzeugen bekannt.

Die US-amerikanische Druckschrift US 6,126,233 offenbart einen Kindersitz mit einer Beleuchtungseinrichtung, die über eine Fernsteuerung eines Fahrers geregelt werden kann.

In der deutschen Druckschrift DE 10 2006 005 841 A1 wird ein Fahrzeugsitz mit einer Rückenlehne beschrieben, in die ein Modul im Schulterbereich oder darüber, in einer Verankerung eingesetzt ist, wobei das Modul als Leselampe ausgestaltet sein kann.

Ein Bezug für einen Fahrersitz wird in der deutschen Druckschrift DE 103 19 140 A1 beschrieben, wobei der Bezug Beleuchtungseinrichtungen umfasst.

Eine aus einem Rückenteil eines Sitzes ausziehbare Leselampe wird durch die deutsche Druckschrift DE 200 19 739 U1 offenbart.

Die Druckschrift DE 10 2006 052 308 A1 betrifft einen Fahrzeugsitz mit einer Lichtquelle zur Beleuchtung eines Fondbereichs eines Fahrzeugs, bei dem der Fahrzeugsitz eine Lichtquelle aufweist, die Licht entgegen einer Fahrtrichtung abstrahlt.

Eine gattungsgemässe Vorrichtung zum Beleuchten eines auf einem Sitz in einem Fahrzeug angeordneten Objekts und ein gattungsgemässes Verfahren zur Beleuchtung eines auf einem Sitz in einem Fahrzeug angeordneten Objekts, sind aus dem Dokument US2009/0129105A bekannt. Vor diesem Hintergrund wird eine Vorrichtung mit den Merkmalen des unabhängigen Patentanspruchs 1 sowie ein Verfahren mit den Merkmalen des Patentanspruchs 8 vorgestellt. Ausgestaltungen ergeben sich aus der Beschreibung sowie den Zeichnungen und den abhängigen Patentansprüchen.

Es wird somit eine Vorrichtung zum Beleuchten eines auf mindestens einem Sitz in einem Fahrzeug angeordneten Objekts vorgestellt, bei dem mindestens eine in dem mindestens einen Sitz angeordnete Beleuchtung in Abhängigkeit einer über mindestens einen Sensor detektierten Anwesenheit des Objekts derart zu aktivieren ist, dass das Objekt an mindestens einem im Voraus zu definierenden Punkt zu beleuchten ist.

Objekte, wie bspw. Babyschalen können durch Sichtschirme oder andere Vorrichtungen vor einer Beleuchtung durch bspw. eine Deckenleuchte abgeschirmt sein, so dass ein in einer Babyschale angeordnetes Kind nicht oder nicht ausreichend durch Verwendung einer Deckenleuchte zu beleuchten ist.

Die erfindungsgemäße Vorrichtung dient insbesondere zum Beleuchten eines in einer Babyschale auf einem Sitz, wie bspw. einem Beifahrer- oder Passagiersitz in einem Fahrzeug angeordneten Kindes durch in einer Rückenlehne des Sitzes angeordnete Beleuchtungselemente, d. h. eine Beleuchtung. Die in der Rückenlehne des Sitzes angeordnete mindestens eine Beleuchtung befindet sich in der Regel in einem Sichtbereich des Kindes und kann das Kind dadurch an Sichtschirmen zur Begrenzung des Sichtbereichs des Kindes vorbei beleuchten, so dass das Kind für einen Beobachter, wie bspw. einen Fahrer leicht und schnell zu erkennen bzw. zu überwachen ist.

Da die mindestens eine Beleuchtung ferner auf das Kind bzw. die Babyschale, d. h. das Objekt reduziert ist, entsteht keine Blendwirkung für einen Gegenverkehr, wie es für nicht fokussierte bzw. diffuse Beleuchtungen, wie bspw. eine Innenraumbeleuchtung an einer Decke des Fahrzeugs typisch ist.

Um eine An- oder Abwesenheit eines ggf. zu beleuchtenden Objekts auf einem jeweiligen Sitz zu erkennen, sowie ggf. das Objekt bzw. einen Typ oder Details des Objekts zu erkennen, d. h. zu detektieren, ist vorgesehen, dass die erfindungsgemäße Vorrichtung mindestens einen Sensor umfasst, der Informationen über einen Innenraum des Fahrzeugs, insbesondere im Bereich des zu beleuchtenden Objekts bereitstellt.

Gemäß einer Ausgestaltung der erfindungsgemäßen Vorrichtung ist, zur An- bzw. Beleuchtung des Objekts, d. h. bspw. der Babyschale, vorgesehen, dass das Objekt derart von der in dem jeweiligen Sitz angeordneten mindestens einen Beleuchtung, wie bspw. einem LED-Panel angeleuchtet wird, dass lediglich derjenige Bereich des Objekts beleuchtet ist, der bspw. einen Kopfbereich des Kindes beherbergt. Selbstverständlich ist jedoch auch möglich, dass jeder weitere Bereich des Objekts zu beleuchten ist.

In Abhängigkeit von Daten des mindestens einen Sensors kann ein Steuergerät, bspw. durch Abgleich mit einer von dem Steuergerät umfassten Datenbank, ein auf einem jeweiligen Sitz angeordnetes Objekt typisieren, d. h. das jeweilige Objekt identifizieren. Dazu können bspw. bei Verwendung eines Gewichtssensors spezifische Gewichte jeweiliger Objekte in dem Steuergerät hinterlegt sein, die mit einem jeweiligen ermittelten Gewicht des jeweiligen auf dem jeweiligen Sitz angeordneten Objekts, bspw. durch Berechnung einer Differenz zwischen hinterlegtem Wert und über den mindestens einen Sensor ermittelten Wert, abgeglichen werden.

Es ist selbstverständlich möglich, dass mehrere, insbesondere alle Sitze eines Fahrzeugs mit einer erfindungsgemäß vorgesehenen Beleuchtung ausgestattet sind, so dass ein jeweiliges Objekt auf einem beliebigen Sitz eines jeweiligen Fahrzeugs angeordnet und beleuchtet werden kann.

Gemäß weiterer Ausgestaltung ist vorgesehen, dass die mindestens eine Beleuchtung in ihrer Intensität, d. h. in ihrer Leuchtkraft, bspw. in Abhängigkeit von Werten eines Helligkeitssensors zur Ermittlung einer aktuellen Helligkeit innerhalb bzw. außerhalb des Fahrzeugs oder in Abhängigkeit einer durch ein Mensch-Maschine-Interface vorgenommenen Eingabe eines Nutzers gedimmt wird.

In einer möglichen Ausgestaltung der erfindungsgemäßen Vorrichtung ist vorgesehen, dass nur diejenigen Objekte zu einer Aktivierung der mindestens einen Beleuchtung führen, die in durch den mindestens einen Sensor messbaren Eigenschaften mit bspw. in dem Steuergerät hinterlegten Werten jeweiliger Eigenschaften, wie bspw. Gewicht und/oder Größe übereinstimmen. Dabei kann in dem Steuergerät auch ein Bereich, d. h. eine untere und eine obere Grenze hinterlegt sein, innerhalb dessen jeweilige messbare Eigenschaften zur Aktivierung der mindestens einen Beleuchtung führen.

In einer weiteren möglichen Ausgestaltung der erfindungsgemäßen Vorrichtung ist vorgesehen, dass die mindestens eine Beleuchtung derart in dem mindestens einen Sitz angeordnet ist, dass das Objekt durch eine mindestens teilweise transparente Oberfläche des mindestens einen Sitzes hindurch zu beleuchten ist.

Um das Objekt auf dem jeweiligen Sitz selektiv, d. h. ausschließlich in bestimmten Bereichen beleuchten zu können, ist vorgesehen, dass die mindestens eine Beleuchtung in dem jeweiligen Sitz integriert ist, d. h. sich unter einer Oberfläche des jeweiligen Sitzes befindet und durch die Oberfläche, die zumindest teilweise transparent ausgestaltet ist, hindurch scheint bzw. leuchtet. Dazu kann die mindestens eine Beleuchtung auch in mindestens einer Naht des mindestens einen Sitzes angeordnet sein.

Durch eine transparente Oberfläche des mindestens einen Sitzes kann die mindestens eine Beleuchtung ein jeweiliges Objekt effizient, d. h. mit geringem energetischem Einsatz beleuchten. Weiterhin kann die transparente Oberfläche derart ausgestaltet sein, dass sowohl Farbtemperatur als auch Intensität bzw. Helligkeit, mit der das jeweilige Objekt angestrahlt wird, kontrolliert bzw. verändert werden können. Die transparente Oberfläche eignet sich ebenso zum Erzeugen eines diffusen Lichtkegels, der eine Blendwirkung für ein ggf. in dem jeweiligen Objekt angeordnetes Kind gegenüber einem direkt auf das jeweilige Objekt bzw. Kind einwirkenden Lichtkegel reduziert.

Um das Kind zu beruhigen bzw. abzulenken, ist gemäß weiterer Ausgestaltung der erfindungsgemäßen Vorrichtung vorgesehen, dass die mindestens eine Beleuchtung einen kontinuierlichen Farbwechsel vollzieht, so dass das Kind sich auf die sich verändernden Beleuchtungselemente konzentriert und dadurch ggf. beruhigt. Eine sich verändernde Beleuchtung kann weiterhin zum Erzeugen einer Lichtstimmung innerhalb des jeweiligen Fahrzeug verwendet werden, die sich auch auf weitere Passagiere und/oder den Fahrer auswirken kann.

Ferner ist denkbar, dass das mindestens eine Beleuchtungselement auf dem Sitz angeordnet ist und bspw. in Form einer Naht oder als lumineszierende Leuchttextilie in eine Oberflächenstruktur des jeweiligen Sitzes eingearbeitet ist.

Lumineszierende Leuchttextilien basieren auf leuchtenden Fasern, die in ein jeweiliges Texturgewebe, das bspw. für eine Oberfläche eines jeweiligen Sitzes verwendet wird, eingearbeitet, d. h. eingewebt werden. Dies bedeutet, dass Bereiche des jeweiligen Sitzes, die mit Stoff bzw. Gewebe überzogen sind, ggf. zu beleuchten sind, auch ohne dass spezielle Beleuchtungen, wie bspw. LEDs dort angeordnet werden müssen, wodurch sich ein Gewicht des jeweiligen Sitzes reduziert.

In einer weiteren möglichen Ausgestaltung der erfindungsgemäßen Vorrichtung ist vorgesehen, dass der mindestens eine Sensor ausgewählt ist aus der folgenden Liste an Sensoren: Gewichtssensor, Lasersensor, Ultraschallsensor, Radarsensor und Infrarotsensor.

Um das jeweilige Objekt auf dem jeweiligen Sitz zu erfassen, d. h. zu detektieren, kann jede technisch geeignete Form von Innenraumsensoren zur Überwachung eines Innenraums eines Fahrzeugs bzw. eine Kombination aus Innenraumsensoren verwendet werden, um das jeweilige Objekt zu identifizieren.

Zur Identifikation bzw. Typisierung des jeweiligen Objekts ist gemäß weiterer Ausgestaltung vorgesehen, dass das jeweilige Objekt bspw. bei einer erstmaligen Verwendung bzw. Anordnung an ein jeweiliges Fahrzeug angelernt wird, d. h. dass jeweilige Sensoren das jeweilige Objekt vermessen bzw. scannen und dabei ermittelte Messwerte in einem Steuergerät des Fahrzeugs hinterlegen bzw. mit entsprechenden, in dem Steuergerät hinterlegten Werten abgleichen, so dass bei einer erneuten Messung vergleichbarer Werte, bzw. einer Kombination von vergleichbaren Werten verschiedener Sensoren, auf einen Typ sowie damit verbundene Eigenschaften des jeweiligen Objekts geschlossen wird und das Steuergerät in Abhängigkeit des erfassten Typs bzw. der erfassten Eigenschaften die mindestens eine Beleuchtung automatisch aktiviert oder deaktiviert bzw. nicht aktiviert.

Um das jeweilige Objekt zu erkennen bzw. zu typisieren, kann ferner vorgesehen sein, dass bei einer erstmaligen Anordnung des jeweiligen Objekts im Fahrzeug in bspw. einem Kalibrierungsmodus, der von einem jeweiligen Nutzer bzw. Fahrer aktiviert werden kann, ein Klassifikator, wie bspw. ein neuronales Netz an das jeweilige Objekt angelernt wird, so dass der Klassifikator das jeweilige Objekt bei erneuter Anordnung im Fahrzeug erkennt bzw. wiedererkennt und die mindestens eine Beleuchtung automatisch aktiviert werden kann.

In einer weiteren möglichen Ausgestaltung der erfindungsgemäßen Vorrichtung ist vorgesehen, dass die mindestens eine Beleuchtung zumindest teilweise in einer Farbe leuchtet.

Durch ein zumindest teilweise farbiges Leuchten können Beleuchtungseigenschaften, wie bspw. Helligkeit und Farbtemperatur geregelt werden. So kann bspw. um ein Kind in einer Babyschale nicht zu blenden, ein gelblicher Farbton zur Beleuchtung der Babyschale bzw. des Kindes gewählt werden. Weiterhin kann bspw. in Abhängigkeit von Messwerten eines Außenlichtsensors ein vordefiniertes Farbschema durch die mindestens eine Beleuchtung wiedergegeben werden, so dass bspw. ein Sonnenaufgang oder ein Sonnenuntergang imitiert wird und sich eine Lichtstimmung im Fahrzeug entsprechend ändert.

In einer weiteren möglichen Ausgestaltung der erfindungsgemäßen Vorrichtung ist vorgesehen, dass die mindestens eine Beleuchtung ausgewählt ist aus der folgenden Liste an Beleuchtungstypen: LED-Panel, LED-Band, LED-Leiste, elektrolumineszierendes Pigment, Lichtwellenleiter und Leuchttextilie.

Als von dem mindestens einen Sitz umfasste, mindestens eine Beleuchtung kann jede technisch geeignete Beleuchtungseinrichtung, insbesondere sogenannte Leuchttextilien, die bspw. auf gewebten Lichtwellenleitern basieren, verwendet werden.

Weiterhin ist denkbar, dass lichtemittierende Dioden (LEDs) in einen jeweiligen Sitz eingearbeitet, d. h. an dem jeweiligen Sitz angeordnet werden und durch bspw. eine transparente Oberfläche des jeweiligen Sitzes hindurch leuchten bzw. scheinen. Um durch bspw. eine LED erzeugtes Licht innerhalb des jeweiligen Sitzes zu verteilen, können Lichtwellenleiter, bspw. in Form von Glasfasern, in dem jeweiligen Sitz verbaut sein, so dass das von der LED erzeugte Licht durch die Lichtwellenleiter an einen gewünschten Ort innerhalb des Sitzes transportiert und von dort aus zur Beleuchtung des Objekts verwendet werden kann.

Ferner betrifft die vorliegende Erfindung ein Verfahren zur Beleuchtung eines auf mindestens einem Sitz in einem Fahrzeug angeordneten Objekts durch mindestens eine in dem mindestens einen Sitz angeordnete Beleuchtung, bei dem die Beleuchtung derart geregelt wird, dass das Objekt selektiv an einer spezifischen, im Voraus bereitgestellten Stelle beleuchtet wird.

Das erfindungsgemäße Verfahren dient insbesondere zum Betrieb der erfindungsgemäßen Vorrichtung.

In einer möglichen Ausgestaltung des erfindungsgemäßen Verfahrens ist vorgesehen, dass die mindestens eine Beleuchtung derart geregelt wird, dass das Objekt eine konstante Helligkeit abstrahlt.

Um weder den Fahrer des Fahrzeugs oder den dem Fahrzeug entgegenkommenden Verkehr, noch ein ggf. beleuchtetes Kind in einer Babyschale zu blenden, sieht das vorgestellte Verfahren in Ausgestaltung vor, die mindestens eine Beleuchtung derart zu regeln, dass das jeweilige Objekt eine konstante Helligkeit abstrahlt, d. h. in Abhängigkeit einer aktuellen Helligkeit im Fahrzeug und/oder einer aktuellen Umgebung stärker oder schwächer beleuchtet wird. Eine Anpassung einer aktuellen Helligkeit, die von der mindestens einen Beleuchtung ausgeht, kann bspw. durch ein Steuergerät in Abhängigkeit eines Helligkeitssensors erfolgen.

In einer weiteren möglichen Ausgestaltung des erfindungsgemäßen Verfahrens ist vorgesehen, dass die mindestens eine Beleuchtung in Abhängigkeit einer aktuellen Stellung einer Airbagschaltung aktiviert bzw. deaktiviert wird.

Um die mindestens eine Beleuchtung zu aktivieren und ein jeweiliges Objekt dadurch zu beleuchten, kann die mindestens eine Beleuchtung bspw. manuell durch eine Mensch-Maschine-Schnittstelle, d. h. ein Mensch-Maschine-Interface des Fahrzeugs oder in Abhängigkeit einer Airbagschaltung, wie sie zum Deaktivieren eines Airbags bspw. an einem Beifahrersitz vorgeschrieben ist, aktiviert werden. Dies bedeutet, dass die mindestens eine Beleuchtung im Falle einer Deaktivierung des Airbags sich aktiviert und den jeweiligen Sitz bspw. in einen "Babyschalenmodus" versetzt, der zur Aktivierung der erfindungsgemäß vorgesehenen mindestens einen Beleuchtung führt und ggf. eine Ausrichtung von Sitzteilen, wie bspw. einer Rückenlehne, für eine optimale Ausleuchtung der Babyschale, d. h. des Objekts bewirkt. Dazu kann der jeweilige Sitz ein Steuergerät umfassen, dass die jeweiligen Sitzteile bzw. in den jeweiligen Sitzteilen angeordnete Aktuatoren derart ansteuert, dass diese sich in einer vorbestimmten Position, die bspw. in dem Steuergerät hinterlegt ist, ausrichten. Es ist ebenfalls denkbar, dass das Steuergerät zum Ansteuern der Aktuatoren in dem jeweiligen Sitz in ein Interface bzw. ein Zentral- oder Komfortsteuergerät des Fahrzeugs integriert ist.

In einer weiteren möglichen Ausgestaltung des erfindungsgemäßen Verfahrens ist vorgesehen, dass eine Bewegung mindestens eines von dem mindestens einen Sitz umfassten Aktuators auf das Objekt übertragen wird.

Insbesondere beim Transport eines Kindes in einer Babyschale kann es sinnvoll erscheinen, dass das Kind durch die Babyschale stimuliert, d. h. beruhigt wird, indem bspw. eine Massagefunktion des jeweiligen Sitzes aktiviert wird und das Kind mittels eines bspw. wiederkehrenden definierten Musters an Bewegungen eines von dem jeweiligen Sitz umfassten Aktuators durch die Babyschale hindurch beruhigt wird, so dass der jeweilige Fahrer nicht durch das Kind abgelenkt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine mögliche Ausgestaltung einer Steuerungslogik zum Steuern einer möglichen Ausgestaltung des erfindungsgemäßen Verfahrens.
Figur 2 zeigt eine mögliche Ausgestaltung der erfindungsgemäß vorgesehenen Beleuchtung.

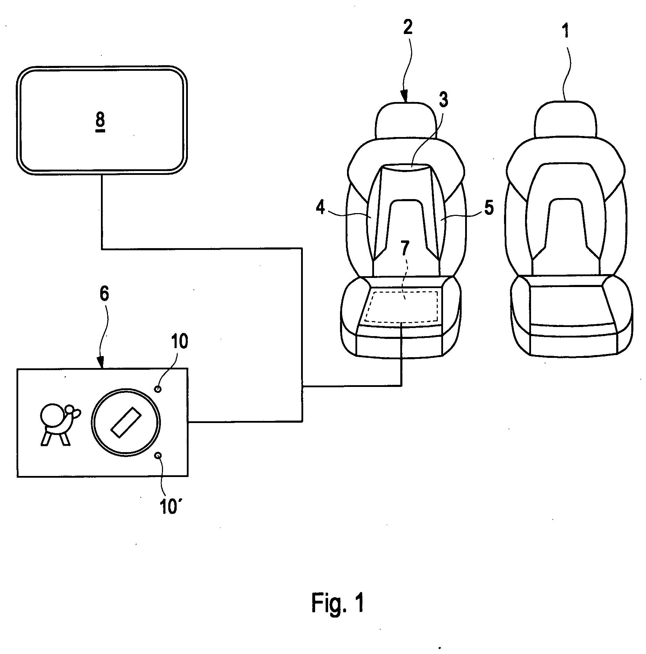

In Figur 1 sind ein Fahrersitz 1 und ein Beifahrersitz 2 eines Fahrzeugs schematisch dargestellt, wobei der Beifahrersitz 2 Beleuchtungen 3, 4, und 5 umfasst, die in den Beifahrersitz 2 eingearbeitet sind und durch eine transparente Oberfläche des Beifahrersitzes 2 hindurch leuchten.

Die Beleuchtungen 3, 4 und 5 werden durch eine manuelle Umstellung einer Airbagschaltung 6 oder durch ein Mensch-Maschine-Interface 8 in einem Armaturenbrett eines den Beifahrersitz 2 umfassenden Fahrzeugs in Verbindung mit einer durch einen Gewichtssensor 7 gemessenen Belastung des Beifahrersitzes 2 aktiviert bzw. deaktiviert.

Im Falle einer Aktivierung durch die Airbagschaltung 6 wird, sobald die Airbagschaltung 6 bspw. durch einen Schlüssel von einer aktivierten Stellung 10 des Airbags in eine deaktivierte Stellung 10' umgestellt wird und durch den Gewichtssensor 7 der in einer Sitzfläche des Beifahrersitzes 2 angeordnet ist, eine Belastung, die innerhalb vorgegebener Schwellenwerte liegt, detektiert wird, ein Schaltsignal an ein Steuergerät zur Steuerung der Beleuchtungen 3, 4 und 5 erzeugt. Für den Fall, dass die Beleuchtungen 3, 4 und 5 über das Mensch-Maschine-Interface 8 aktiviert werden, generiert das Mensch-Maschine-Interface 8 in Abhängigkeit der durch den Gewichtssensor 7 gemessenen Belastung, d. h. eines Gewichts, das entsprechende Schaltsignal und übermittelt das Schaltsignal an das Steuergerät zur Steuerung der Beleuchtungen 3, 4 und 5.

Sobald eine Babyschale auf dem Beifahrersitz 2 platziert wird, misst der Gewichtssensor 7 eine Belastung. Falls die Belastung innerhalb vorgegebener Schwellenwerte, wie bspw. 3000 Gramm bis 15000 Gramm liegt, wird durch das mit dem Gewichtssensor 7 verbundene Steuergerät eine Belegung des Beifahrersitzes 2 durch eine Babyschale an das die Beleuchtungen 3, 4 und 5 aktivierende Steuergerät gemeldet, so dass das Steuergerät ggf. in Abhängigkeit einer Stellung bzw. Schaltung des Mensch-Maschine-Interfaces 8 und/oder der Airbagschaltung 6 die Beleuchtungen 3, 4 und 5 aktivieren kann. Die Schwellenwerte zur Aktivierung der Beleuchtungen 3, 4 und 5 in Abhängigkeit des Gewichtssensors 7 können fest in dem Steuergerät hinterlegt sein oder bspw. durch das Mensch-Maschine-Interface 8 eingestellt werden.

Das Steuergerät berechnet nach Empfang eines Messwerts des Gewichtssensors, ob der ermittelte Messwert innerhalb der Schwellenwerte liegt und generiert bspw. in Abhängigkeit eines mittels eines Helligkeitssensors aktuell im Innenraum des Fahrzeugs gemessenen Helligkeit einen Schaltimpuls zum Betrieb der Beleuchtungen 3, 4 und 5. Ferner berechnet das Steuergerät eine zum Erreichen einer gewünschten Leuchtkraft einer auf dem Beifahrersitz 2 angeordneten Babyschale durch die Beleuchtungen 3, 4 und 5 notwendige Beleuchtungsstärke.

Die Leuchtkraft, die auf Grund von Reflektionen der Beleuchtungen 3, 4 und 5 durch die Babyschale, bzw. durch ein in der Babyschale angeordnetes Kind erzeugt wird, kann ferner über das Mensch-Maschine-Interface 8 geregelt werden.

In Ausgestaltung ist denkbar, dass die Airbagschaltung 6 in Abhängigkeit einer über bspw. den Gewichtssensor 7 detektierten Anwesenheit der Babyschale deaktiviert wird.

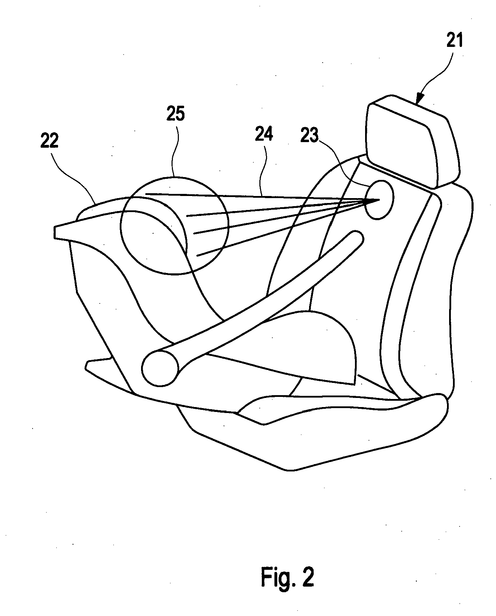

Die in Figur 2 dargestellte Anordnung zeigt einen Sitz 21 mit einer auf dem Sitz angeordneten Babyschale 22, die durch eine in dem Sitz 21 angeordnete Beleuchtung 23 angestrahlt wird, wie durch Strahlengänge 24 angedeutet.

Die Beleuchtung 23 ist derart in den Sitz 21 integriert und der Sitz 21 automatisch durch mit einem Steuergerät verbundene Aktuatoren nach Aktivierung der Beleuchtung 23 in eine Position gebracht, dass ein in der Babyschale angeordneten Kindes ausschließlich in einem Bereich 25 angeleuchtet, d. h. angestrahlt wird. Durch das ausschließliche Anstrahlen des Bereichs 25 können ggf. auftretende Blendeffekte für einen Fahrer und ggf. entgegenkommenden Verkehr reduziert bzw. beseitigt werden.

Die Babyschale 22 kann an dem Sitz 21 über bspw. ein Gurtsystem, eine Klemmvorrichtung, eine Schraubvorrichtung oder jede weitere technisch geeignete Vorrichtung bzw. jedes technisch geeignete Verfahren zum sicheren, d. h. festen Fixieren eines Objekts auf einem Sitz, d. h. einem Sitzteil eines Sitzes, an dem Sitz 21 fixiert werden. Es ist insbesondere vorgesehen, dass die Babyschale 22 derart an dem Sitz 21 angeordnet wird, dass ein in der Babyschale 22 angeordnetes Kind in Richtung der Beleuchtung 23 bzw. einer Sitzrückenlehne des Sitzes 21 blickt.

## Patentansprüche

1. Vorrichtung zum Beleuchten eines auf einem Sitz (1, 2, 21) in einem Fahrzeug angeordneten Objekts (22), bei dem mindestens eine in dem mindestens einen Sitz (1, 2, 21) angeordnete Beleuchtung (3, 4, 5, 23) in Abhängigkeit einer über mindestens einen Sensor (7) detektierten Anwesenheit des Objekts (22) derart zu aktivieren ist, dass das Objekt (22) an mindestens einem im Voraus zu definierenden Punkt zu beleuchten ist, **dadurch gekennzeichnet, dass** durch den mindestens einen Sensor selektiv derartige Objekte (22) zu erkennen sind, die in durch den Sensor (7) messbaren Eigenschaften mit in einem Steuergerät hinterlegten Werten der messbaren Eigenschaften übereinstimmen.

2. Vorrichtung nach Anspruch 1, wobei die mindestens eine Beleuchtung derart in dem mindestens einen Sitz (1, 2, 21) angeordnet ist, dass das Objekt (22) durch eine mindestens teilweise transparente Oberfläche des mindestens einen Sitzes (1, 2, 21) hindurch zu beleuchten ist.

3. Vorrichtung nach Anspruch 1, wobei die mindestens eine Beleuchtung (3, 4, 5, 23) in mindestens einer Naht des mindestens einen Sitzes (1, 2, 21) angeordnet ist.

4. Vorrichtung nach einem der voranstehenden Ansprüche, wobei der mindestens eine Sensor ausgewählt ist aus der folgenden Liste an Sensoren: Gewichtssensor, Lasersensor, Ultraschallsensor, Radarsensor und Infrarotsensor.

5. Vorrichtung nach einem der voranstehenden Ansprüche, wobei das Objekt (22) durch die mindestens eine Beleuchtung (3, 4, 5, 23) zumindest teilweise in einer Farbe zu beleuchten ist.

6. Vorrichtung nach einem der voranstehenden Ansprüche, bei dem die mindestens eine Beleuchtung (3, 4, 5, 23) ausgewählt ist aus der folgenden Liste an Beleuchtungstypen: LED-Panel, LED-Band, LED-Leiste, elektrolumineszierendes Pigment, Lichtwellenleiter und Leuchttextilie.

7. Verfahren zur Beleuchtung eines auf einem Sitz in einem Fahrzeug angeordneten Objekts durch mindestens eine in dem Sitz angeordnete Beleuchtung, bei dem die Beleuchtung in Abhängigkeit einer über mindestens einen Sensor detektierten Anwesenheit des Objekts derart geregelt wird, dass das Objekt selektiv an einer spezifischen, im Voraus definierten Stelle beleuchtet wird, **dadurch gekennzeichnet, dass** durch den mindestens einen Sensor selektiv derartige Objekte erkannt werden, die in durch den Sensor messbaren Eigenschaften mit in einem Steuergerät hinterlegten Werten der messbaren Eigenschaften übereinstimmen.

8. Verfahren nach Anspruch 8, bei dem die mindestens eine Beleuchtung derart geregelt wird, dass das Objekt eine konstante Helligkeit abstrahlt.

9. Verfahren nach einem der Ansprüche 7 oder 8, bei dem die mindestens eine Beleuchtung in Abhängigkeit einer aktuellen Stellung einer Airbagschaltung aktiviert wird.

10. Verfahren nach einem der Ansprüche 7 bis 9, bei dem eine Bewegung mindestens eines von dem Sitz umfassten Aktuators auf das Objekt übertragen wird.

11. Verfahren nach einem der Ansprüche 7 bis 10, bei dem die mindestens eine Beleuchtung mittels einer Mensch-Maschine-Schnittstelle bedient wird.

## Claims

1. Device for illuminating an object (22) arranged on a seat (1, 2, 21) in a motor vehicle, in which the at least one illuminating means (3, 4, 5, 23) arranged in the at least one seat (1, 2, 21) can be activated depending on the presence of the object (22) detected by at least one sensor (7) in such a manner that the object (22) can be illuminated at at least one point to be defined in advance, **characterised in that** by means of the at least one sensor such objects (22) can be detected selectively which in properties measurable by the sensor (7) coincide with values of the measurable properties saved in a control device

2. Device according to claim 1, wherein the at least one illuminating means is arranged in the at least one seat (1, 2, 21) such that the object (22) can be illuminated through an at least partially transparent surface of the at least one seat (1, 2, 21).

3. Device according to claim 1, wherein the at least one illuminating means (3, 4, 5, 23) is arranged in at least one seam of the at least one seat (1, 2, 21).

4. Device according to any of the preceding claims, wherein the at least one sensor is selected from the following list of sensors: weight sensor, laser sensor, ultrasound sensor, radar sensor and infrared sensor.

5. Device according to any of the preceding claims, wherein the object (22) is illuminated at least partially in one colour by the at least one illuminating means (3, 4, 5, 23).

6. Device according to any of the preceding claims, in which the at least one illuminating means (3, 4, 5, 23) is selected from the following list of lighting types: LED panel, LED bar, LED strip, electroluminescent pigment, fibre optic cable and light-emitting textile.

7. Method for lighting an object arranged on a seat in a motor vehicle by means of the at least one illuminating means arranged in the seat, in which the illumination can be controlled depending on the presence of the object detected by at least one sensor such that the object is illuminated selectively at a specific, previously defined point, **characterised in that** by means of the at least one sensor objects are detected selectively which in properties measured by the sensor coincide with values of the measurable properties saved in a control device.

8. Method according to claim 8, in which the at least one illuminating means is controlled such that the object radiates a constant level of brightness.

9. Method according to any of claims 7 or 8, in which the at least one illuminating means is activated depending on the current position of an airbag circuit.

10. Method according to any of claims 7 to 9, in which a movement of at least one actuator included in the seat is transmitted to the object.

11. Method according to any of claims 7 to 10, in which the at least one illuminating means is operated by means of a human-machine-interface.

## Revendications

1. Dispositif d'éclairage d'un objet (22) disposé sur un siège (1, 2, 21) dans un véhicule, pour lequel au moins un éclairage (3, 4, 5, 23) disposé dans l'au moins un siège (1, 2, 21) est à activer en fonction d'une présence détectée par le biais d'au moins un capteur (7) de l'objet (22) de telle manière que l'objet (22) soit à éclairer sur au moins un point à définir au préalable, **caractérisé en ce que** des objets (22) de la sorte sont à reconnaître par l'au moins un capteur sélectivement, lesquels concordent dans des propriétés mesurables par le capteur (7) avec des valeurs enregistrées dans un appareil de commande des propriétés mesurables.

2. Dispositif selon la revendication 1, dans lequel l'au moins un éclairage est disposé dans l'au moins un siège (1, 2, 21) de telle manière que l'objet (22) soit à éclairer au travers d'une surface au moins partiellement transparente d'au moins un siège (1, 2, 21).

3. Dispositif selon la revendication 1, dans lequel l'au moins un éclairage (3, 4, 5, 23) est disposé dans au moins une couture d'au moins un siège (1, 2, 21).

4. Dispositif selon l'une quelconque des revendications précédentes, dans lequel l'au moins un capteur est sélectionné parmi la liste suivante de capteurs : capteur de poids, capteur laser, capteur à ultrasons, capteur radar et capteur infrarouge.

5. Dispositif selon l'une quelconque des revendications précédentes, dans lequel l'objet (22) est à éclairer par l'au moins un éclairage (3, 4, 5, 23) au moins partiellement dans une couleur.

6. Dispositif selon l'une quelconque des revendications précédentes, pour lequel l'au moins un éclairage (3, 4, 5, 23) est sélectionné parmi la liste suivante de types d'éclairage : panneau à LED, bande à LED, barre à LED, pigment électroluminescent, conducteur d'ondes lumineuses et textile lumineux.

7. Procédé d'éclairage d'un objet disposé sur un siège dans un véhicule par au moins un éclairage disposé dans le siège, pour lequel l'éclairage est régulé en fonction d'une présence détectée par le biais d'au moins un capteur de l'objet de telle manière que l'objet soit éclairé sélectivement sur un endroit spécifique défini au préalable, **caractérisé en ce que**
des objets de la sorte sont reconnus par l'au moins un capteur sélectivement qui concordent dans des propriétés mesurables par le capteur avec des valeurs enregistrées dans un appareil de commande des propriétés mesurables.

8. Procédé selon la revendication 8, pour lequel l'au moins un éclairage est régulé de telle manière que l'objet émette une luminosité constante.

9. Procédé selon l'une quelconque des revendications 7 ou 8, pour lequel l'au moins un éclairage est activé en fonction d'une position actuelle d'un circuit de coussin gonflable.

10. Procédé selon l'une quelconque des revendications 7 à 9, pour lequel un mouvement au moins d'un actionneur compris par le siège est transmis à l'objet.

11. Procédé selon l'une quelconque des revendications 7 à 10, pour lequel l'au moins un éclairage est commandé au moyen d'une interface homme-machine.
